# EUROPÄISCHE PATENTSCHRIFT

(11) **EP 1 615 737 B1**
(45) Veröffentlichungstag und Bekanntmachung des Hinweises auf die Patenterteilung: **25.06.2008**
(21) Anmeldenummer: 04726463.5
(22) Anmeldetag: 08.04.2004
(51) Int. Cl.: B22D 11/128

(54) **STRANGFUEHRUNGSROLLE**
STRAND-GUIDING ROLLER
GALET DE GUIDAGE DE BARRE

(30) Priorität: 23.04.2003 AT 6152003
(43) Veröffentlichungstag der Anmeldung: 18.01.2006
(73) Patentinhaber: Siemens VAI Metals Technologies GmbH & Co, 4031 Linz (AT)
(72) Erfinder: GUTTENBRUNNER, Josef, A-4522 Sierning (AT); STARRERMAIR, Thomas, A-4407 Dietach (AT); DEIBL, Günther, A-4060 Leonding (AT)
(74) Vertreter: Maier, Daniel Oliver
(86) Internationale Anmeldenummer: PCT/EP2004/003770
(87) Internationale Veröffentlichungsnummer: WO 2004/094087

(56) Entgegenhaltungen:
- DE-A- 2 745 578

## Beschreibung

Die Erfindung betrifft eine Strangführungsrolle zum Stützen und Führen von gegossenen Metallsträngen in einer Stranggießanlage, mit einer zentralen drehbaren Welle und mit mindestens einem auf dieser Welle verdrehgesichert abgestützten Rollenmantel.

Strangführungsrollen werden in Stranggießanlagen zum Stützen und Führen von kontinuierlich gegossenen Metallsträngen nach deren Austritt aus einer Kokille in einem Strangführungsgerüst eingesetzt. Sie sind hohen thermischen Belastungen ausgesetzt, da die gegossenen Metallstränge die Kokille mit einer Temperatur von über 1000°C verlassen, wenn es sich beispielsweise um Stahlstränge handelt. Bei dickeren Strängen ist noch ein ausgeprägter flüssiger Kern im Strang vorhanden, durch den ferrostatische Kräfte auf die Strangführungsrollen einwirken. Zusätzlich müssen von den Strangführungsrollen Verformungskräfte aus der Strangbiegung abgestützt werden. Dem entsprechend sind die Strangführungsrollen üblicherweise mit einer Innenkühlung ausgestattet und weisen eine den mechanischen Belastungen entsprechende robuste Bauart auf. Die große Strangbreite der gegossenen Stränge erfordert eine Mehrfachlagerung der Strangführungsrolle und dementsprechend einen mehrteiligen Aufbau.

In üblichen Stranggießanlagen kommen zwei Gattungen von Strangführungsrollen zum Einsatz, die sich in ihrem grundsätzlichen Aufbau unterscheiden.

Eine Gattung von Strangführungsrollen umfassen eine feststehende zentrale Achse, auf der ein oder mehrere Rollenmäntel über Gleit- oder Rollenlagerungen drehbar abgestützt sind. Derartige Strangführungsrollen sind beispielsweise bereits aus der DE-A 197 44 077, der DE-A 27 45 578, der DE-A 38 23 655 und der US-A 4,351,383 bekannt. Wegen der Relativbewegung zwischen einzelnen Bauteilen der Strangführungsrolle sind Lagerungen vorzusehen, die thermischen Belastungen ausgesetzt sind und dementsprechend Schutzmaßnahmen erfordern.

Eine weitere Gattung von Strangführungsrollen vermeidet derartige Lagerungen innerhalb der Rollen und umfassen eine zentrale drehbare Welle und daran drehfest montierte Rollenmäntel. Eine prinzipielle Darstellung einer derartigen Strangführungsrolle findet sich in der DE-A 29 35 217.

Aus der DE-A 25 52 969 ist eine weitere Strangführungsrolle mit einer mehrfach gelagerten durchgehenden Welle bekannt, auf der einzelne Rollenabschnitte durch eine Schweißverbindung drehfest angeordnet sind. Zwischen der zentralen Welle und den Rollenabschnitten ist ein Ringraum als Kühlmittelkanal ausgebildet und mit zentralen Versorgungsleitungen verbunden. Diese verschweißte Bauart lässt eine Zerlegung der Strangführungsrolle und damit einen Austausch der thermisch und mechanisch stark belasteten Rollenabschnitte nicht zu.

Aus der WO 93/19874 ist eine Strangführungsrolle bekannt, deren Rollenkörper im Wesentlichen einstückig ausgebildet ist. Die Herstellung der den Rollenkörper durchsetzenden Kühlmittelleitungen ist jedoch sehr aufwändig und teuer.

In der WO 02/38972 A1 wird anhand der Figuren 1a und 1b von einem Stand der Technik berichtet, der eine Strangführungsrolle mit einer zentralen mehrfach gelagerten Welle und mehreren darauf angeordneten Rollenmäntel betrifft. Jeder Rollenmantel liegt mit seiner gesamten Innenfläche auf der Außenfläche der Welle auf und ist mit ihr über eine Passfeder drehfest verbunden. Die Innenkühlung dieser Strangführungsrolle erfolgt über eine zentral in der Welle geführte Kühlmittelleitung. Eine Strangführungsrolle dieser Bauart weist den grundlegenden Nachteil eines weiten Wärmetransportweges von der Manteloberfläche bis zur Kühlmittelleitung auf. Spalte zwischen der Welle und dem Rollenmantel wirken als Isolator und behindern die Wärmeabfuhr aus der Strangführungsrolle zusätzlich.

Aus der WO 02/38972 A1 ist weiters eine Strangführungsrolle mit einer mehrfach gelagerten Welle und aufgesetzten Rollenmäntel bekannt, wobei jeder Rollenmantel mit einer Passfeder auf der Welle verdrehgesichert angeordnet ist. Zwischen dem Rollenmantel und der Welle ist über einen Teilbereich der Längserstreckung des Rollenmantels ein Ringraum vorgesehen, der mit einem Stoff hoher thermischer Wärmeleitfähigkeit gefüllt ist.

Die Wärmeabfuhr aus der Strangführungsrolle erfolgt durch eine Innenkühlung über eine die Welle durchsetzende zentrale Kühlmittelleitung. Durch den wärmeleitfähigen Füllstoff wird die Sperrwirkung eines Luftspaltes zwischen Rollenmantel und Welle zwar vermieden, es bleibt jedoch trotzdem der große Abstand zwischen der thermisch belasteten Rollenmantel-Oberfläche und der Kühlmittelleitung bestehen.

Aufgabe der vorliegenden Erfindung ist es daher, die Nachteile des bekannten Standes der Technik zu vermeiden und eine Strangführungsrolle vorzuschlagen, die den auftretenden mechanischen und thermischen Belastungen durch den Strang besser gerecht wird. Im Besonderen soll die Auflage des Rollenmantels auf der Welle den auftretenden Belastungen besser entsprechen.

Diese Aufgabe wird bei einer Strangführungsrolle der erfindungsgemäßen Art dadurch gelöst, dass der Rollenmantel über Stützringe auf der Welle abgestützt ist, dass zwischen der Welle und dem Rollenmantel ein von den Stützringen in axialer Richtung begrenzter Ringraum gebildet und der Ringraum als Kühlmittelkanal ausgebildet ist.

Durch die Ausbildung der Stützringe als eigene Bauteile und deren Anordnung in den Randbereichen jedes Rollenmantels wird eine Kräfteeinleitung in die Welle im Nahbereich der stützenden Rollenlager erreicht. Thermische und mechanische Spitzenbelastungen durch Verformungen und Abnützungen werden vermieden. Durch entsprechende Abstufungen im Wellendurchmesser an den Kontaktflächen mit den Stützringen wird gleichzeitig eine leichte Montage und Demontage der Strangführungsrolle für Wartungsarbeiten und den Austausch eines Rollenmantels ermöglicht.

Durch die Bildung eines von den Stützringen in axialer Richtung begrenzter Ringraumes zwischen der Welle und dem Rollenmantel werden voneinander getrennte Bereiche, einerseits für die Kräfteableitung und andererseits für die Wärmeableitung aus dem Rollenmantel, geschaffen und störende Wechselwirkungen ausgeschlossen.

Zur Vermeidung von Leckagen am Ringraum sind zwischen den Stützringen und dem Rollenmantel und zwischen den Stützringen und der zentralen Welle Dichtelemente, vorzugsweise in Ringnuten eingesetzte Dichtringe, angeordnet.

Der Ringraum ist als Kühlmittelkanal ausgebildet, der mit einer in der zentralen Welle angeordneten Kühlmittelleitung über radiale Stichleitungen für die Zu- und Ableitung eines Kühlmittels verbunden ist. Die radialen Stichleitungen münden innerhalb der Längserstreckung der Stützringe in eine Ringnut des Stützringes, der über eine Vielzahl von Austrittsöffnungen zum Ringraum offen ist.

Eine vorteilhafte Ausgestaltung besteht darin, über den Wellenquerschnitt verteilt mehrere radiale Stichleitungen sowohl in einer Kühlmittel-Zuführebene als auch in einer Kühlmittel-Abführebene vorzusehen, damit über den gesamten Umfang des Ringraumes verteilt eine möglichst gleichmäßige axiale Kühlmittelströmung erreicht wird. Ergänzend können in den Ringraum Leiteinrichtungen eingebaut sein, die das axiale Strömungsverhalten im Ringraum zusätzlich vergleichmäßigen. Dementsprechend münden die radialen Stichleitungen innerhalb der Längserstreckung der Stützringe in eine Ringnut des Stützringes, der über eine Vielzahl von Austrittsöffnungen zum Ringraum offen ist.

Der Rollenmantel ist zur Welle durch eine Verdrehsicherung, vorzugsweise eine Passfeder, verdrehgesichert und die Verdrehsicherung durchsetzt hierbei den Ringraum. Durch die Anordnung der Verdrehsicherung innerhalb des Ringraumes zwischen den beiden Stützringen werden die Strömungsverhältnisse des Kühlmittels kaum beeinträchtigt. Es werden jedoch Dichtungsprobleme vermieden, die sich ergeben, wenn die Verdrehsicherung an einer Stützfläche des Rollenmantels auf der Welle angeordnet ist, wie dies bei der in der WO 02/38972 A1 beschriebenen Strangführungsrolle der Fall ist.

Nach einer weiteren möglichen Ausführungsform der erfindungsgemäßen Strangführungsrolle sind zwei einen Rollenmantel auf der Welle abstützenden Stützringe zu einer Stützringhülse verbunden und zwischen dem Rollenmantel und der Stützringhülse ist ein Ringraum ausgebildet, der in seiner axialen Erstreckung von den Stützringen begrenzt ist. Dichtelemente und Kühlmittelkanäle sind analog zur zuvor beschriebenen Ausführungsform angelegt. Die Verdrehsicherung durchsetzt den Ringraum und die Stützringhülse.

Eine mögliche Ausgestaltung der Kühlmitteldurchleitung durch die Strangführungsrolle besteht darin, dass die in der zentralen Welle geführte Kühlmittelleitung von einer Stirnseite der zentralen Welle ausgeht und die in der zentralen Welle angeordnete Kühlmittelleitung für die Kühlmittelabführung an der gegenüberliegenden Stirnseite der zentralen Welle mündet und jeder Kühlmittelleitung eine Dreheinführung zugeordnet ist.

Eine vorteilhafte Ausführungsform, durch die die Kühlmittelversorgung der Strangführungsrollen auf eine Anlagenseite, bzw. Seite der Strangführung, beschränkt werden kann, besteht darin, dass die in der zentralen Welle geführten Kühlmittelleitungen in einer Stirnseite der zentralen Welle münden und diesen Kühlmittelleitungen eine mehrgängige Dreheinführung zugeordnet ist. Diese Ausführungsform ist bei angetriebenen und nicht angetriebenen Strangführungsrollen einsetzbar.

Als Kühlmittel wird üblicherweise Kühlwasser verwendet.

Weitere Vorteile und Merkmale der vorliegenden Erfindung ergeben sich aus der nachfolgenden Beschreibung eines nicht einschränkenden Ausführungsbeispieles, wobei auf die beiliegende Figuren Bezug genommen wird, die folgendes zeigen:
- Fig.1: ein Längsschnitt durch eine erfindungsgemäße Strangführungsrolle,
- Fig. 2: ein Querschnitt durch die Strangführungsrolle entlang der Linie A - A in Fig. 1,
- Fig. 3: eine weitere Ausführungsform der erfindungsgemäßen Strangführungsrolle in einem Längsschnitt eines Rollenabschnittes.

Die Figurendarstellungen zeigen eine erfindungsgemäße Strangführungsrolle in schematischer Darstellung, wie sie beispielsweise für die Anwendung in einer Strangführung einer Stranggießanlage zur Herstellung von Metallsträngen großer Strangbreite mit Brammen- oder Dünnbrammenquerschnitt geeignet ist.

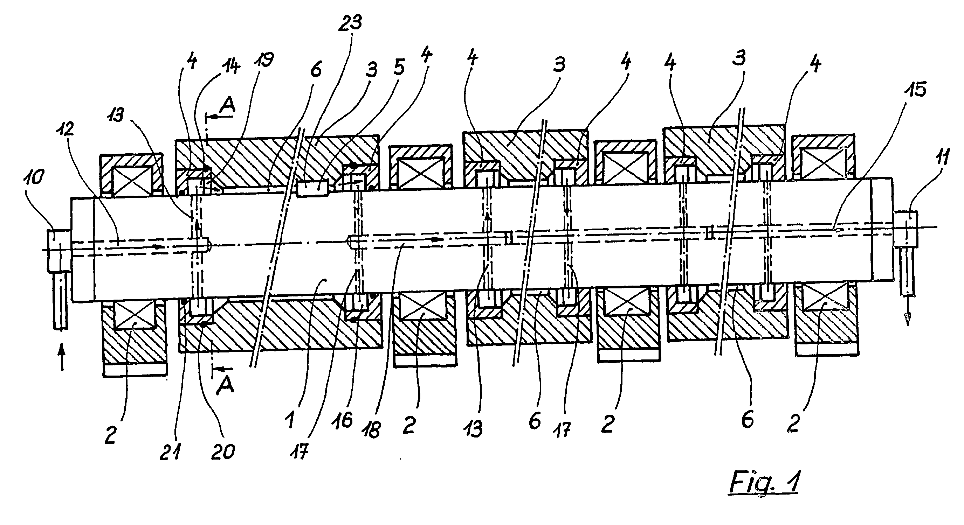

Die in Fig. 1 dargestellte Strangführungsrolle besteht aus einer zentralen Welle 1, die in vier Lagern 2 drehbar abgestützt ist. Die Lager und die sie tragenden Lagergehäuse stützen sich ihrerseits in einem nicht dargestellten Strangführungsgerüst einer Stranggießanlage ab. Als Lager werden üblicherweise Wälzlager eingesetzt. Der zentralen Welle 1 sind drei Rollenmäntel 3 zugeordnet, wobei jeder der drei Rollenmäntel über jeweils zwei Stützringe 4 auf der Welle 1 abgestützt ist. Die Lager 2 befinden sich außerhalb der Längserstreckung der benachbarten Rollenmäntel 3. Mit einer Verdrehsicherung 5 ist die Position jedes Rollenmantels 3 zur Welle 1 drehfest festgelegt. Zwischen den Stützringen 4 eines Rollenmantels 3, der Innenmantelfläche des Rollenmantels und der Außenmantelfläche der Welle 1 ist ein Ringraum 6 vorgesehen, der einen Kühlmittelkanal ausbildet. Strangführungsrollen der erfindungsgemäßen Art weisen zumindest zwei, üblicherweise drei Rollenmäntel auf.

Die Strangführungsrolle ist mit einer Innenkühlung ausgestattet. Der Verlauf der Kühlmittelströmung ist in Fig. 1 durch Pfeile gekennzeichnet. Die Kühlmittelzuführung erfolgt an einer Stirnseite der Strangführungsrolle über eine Dreheinführung 10 und die Kühlmittelabführung erfolgt an der gegenüberliegende Stirnseite der Strangführungsrolle durch eine Dreheinführungen 11. Durch eine zentrale Kühlmittelleitung 12, davon abzweigende radiale Stichleitungen 13 und eine Ringnut 14 im Stützring 4 mit axial ausgerichteten Austrittsöffnungen 19 wird das Kühlmittel in den Ringraum 6 eingebracht. Das Kühlmittel strömt, über den ganzen Querschnitt des Ringraumes 6 verteilt, parallel zur Längsachse 15 der Strangführungsrolle durch den Ringraum 6 und wird in einer Ringnut 16 des Stützringes 4 wieder gesammelt und durch radiale Stichleitungen 17 in die zentrale Kühlmittelleitung 18 abgeleitet. Entweder führt die Kühlmittelleitung 18 zu weiteren Stichleitungen 13 eines weiteren Rollenmantels 3 oder nach Vorbeiführung an allen Rollenmäntel 3 zur ableitenden Dreheinführung 11, durch die das Kühlmittel die Strangführungsrolle wieder verlässt. Damit kein Kühlmittel aus dem Ringraum austritt, ist zwischen dem Stützring 4 und dem Rollenmantel 3 ein Dichtelement 20 und zwischen dem Rollenmantel 3 und der Welle 1 ein Dichtelement 21 eingesetzt. Die Dichtelemente sind von in Ringnuten eingesetzten Dichtringen gebildet.

Die Kühlmittelzuführung und die Kühlmittelabführung durch die zentralen Kühlmittelleitungen kann jedoch auch einseitig, an einer Stirnseite der zentralen Welle, über eine zweigängige Dreheinführung erfolgen, wodurch die Kühlmittelversorgung auf eine Seite der Strangführung und damit Anlagenseite einer Stranggießanlage beschränkt ist.

Bei einer angetriebenen Strangführungsrolle werden die zentralen Kühlmittelleitungen für die Kühlmittelzuführung und -abführung zwangsweise, von einer Stirnseite der Strangführungsrolle ausgehend, parallel zur Längsachse der Welle geführt, da der gegenüberliegenden Stirnseite der Rollenantrieb zugeordnet ist. Dem entsprechend ist die angekoppelte Dreheinführung mit zwei Kühlmittel-Anschlüssen ausgestattet.

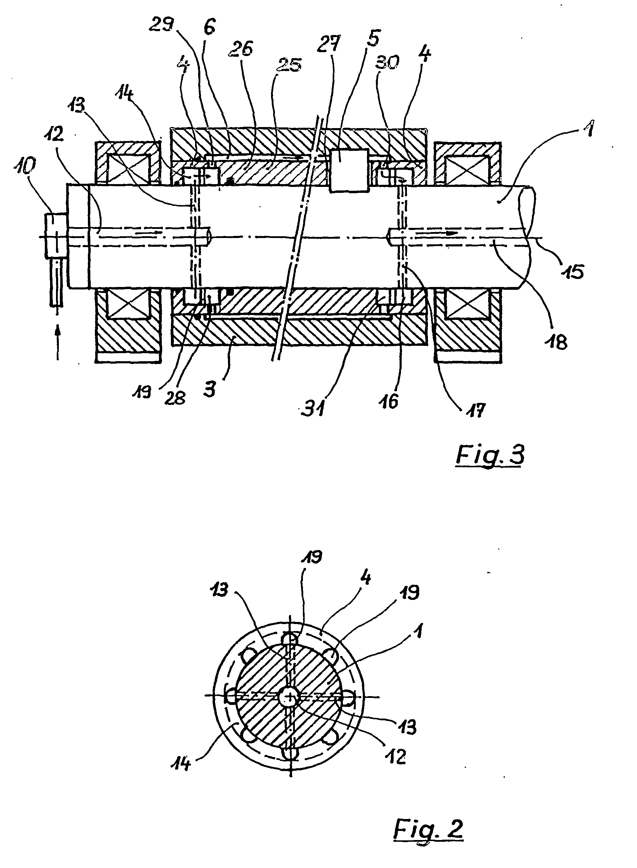

Fig. 2 zeigt in einem Querschnitt durch die Welle 1 entlang der Schnittlinie A-A in Fig. 1 eine Stirnansicht des Stützringes 4 und veranschaulicht die Kühlmittelführung in diesem Bereich. Das Kühlmittel wird aus der zentralen Kühlmittelleitung 12 über die Stichleitungen 13 in eine umlaufende Ringnut 14 im Stützring 4 eingebracht und dort verteilt und durch eine Vielzahl von am Umfang verteilten Austrittsöffnungen 19, die als Nuten oder Bohrungen ausgebildet sein können, dem in Fig. 1 dargestellten Ringraum 6 zwischen Rollenmantel 3 und Welle 1 zugeleitet. Der umgekehrte Ablauf ergibt sich bei der Ableitung des Kühlmittels aus dem Ringraum 6.

Diese Art der Kühlmitteldurchführung ermöglicht mit geringem fertigungstechnischem Aufwand eine möglichst gleichmäßige und effiziente Wärmeabfuhr aus dem Rollenmantel.

Die Verdrehsicherung 5 zur Lagesicherung des Rollenmantels 3 auf der Welle 1 wird von einer oder mehreren Passfedern 23 gebildet, die den Ringraum 6 durchsetzen und zwischen zwei einen Rollenmantel 3 abstützenden Stützringen 4 angeordnet sind. Im Bereich des Ringraumes 6 ist ausreichend Platz für eine lange Passfeder 23 vorhanden, sodass auf den Rollenmantel einwirkende Umfangskräfte oder Drehmomente an der Welle, insbesondere bei angetriebenen Strangführungsrollen, mit geringer Flächenpressung abgestützt werden können.

Eine weitere Ausführungsform der erfindungsgemäßen Strangführungsrolle ist in Fig. 3 in einem Längsschnitt durch einen Abschnitt der Strangführungsrolle dargestellt, wobei für gleiche oder gleichwirkende Bauteile gleiche Bezugszeichen verwendet werden.

Der Rollenmantel 3 ist über Stützringe 4 auf der zentralen Welle 1 abgestützt, wobei die beiden an den Randbereichen des Rollenmantels angeordneten Stützringe 4 durch eine Hülse 25 zu einer Stützringhülse 26 verbunden sind. Die Stützringhülse 26 weist eine sich längs erstreckende Öffnung 27 auf, die von der Verdrehsicherung 5 durchsetzt ist. Diese Verdrehsicherung 5 sichert die Position des Rollenmantels 3 zur zentralen Welle 1. Zwischen den einem Rollenmantel 3 zugeordneten Stützringen 4 einer Stützringhülse 26, der Innenmantelfläche des Rollenmantels 3 und der Außenmantelfläche der Stützringhülse 26 ist ein Ringraum 6 vorgesehen, der einen Kühlmittelkanal ausbildet.

Die Strangführungsrolle ist mit einer Innenkühlung ausgestattet. Der Verlauf der Kühlmittelströmung ist in Fig. 3 durch Pfeile gekennzeichnet. Die Kühlmittelzuführung erfolgt an einer Stirnseite der Strangführungsrolle über eine Dreheinführung 10 und die Kühlmittelabführung erfolgt an der nicht dargestellten gegenüberliegende Stirnseite der Strangführungsrolle durch eine weitere Dreheinführungen. Durch eine zentrale Kühlmittelleitung 12, davon abzweigende radiale Stichleitungen 13 und eine Ringnut 14 im Stützring 4 mit axial ausgerichteten Austrittsöffnungen 19 wird das Kühlmittel in eine weitere Ringnut 28 geleitet und von dort durch weitere radiale Stichleitungen 29, die die Stützringhülse 26 radial durchsetzen in den Ringraum 6 eingebracht. Das Kühlmittel strömt, über den ganzen Querschnitt des Ringraumes 6 verteilt, parallel zur Längsachse 15 der Strangführungsrolle durch den Ringraum 6 und wird über radiale Stichleitungen 30, die die Stützringhülse 26 radial durchsetzen, in eine Ringnut 31 geleitet und in einer Ringnut 16 des Stützringes 4 wieder gesammelt und durch radiale Stichleitungen 17 in die zentrale Kühlmittelleitung 18 abgeleitet. Entweder führt die Kühlmittelleitung 18 zu weiteren Stichleitungen eines weiteren Rollenmantels oder nach Vorbeiführung an allen Rollenmäntel zur ableitenden Dreheinführung, durch die das Kühlmittel die Strangführungsrolle wieder verlässt.

## Patentansprüche

1. Strangführungsrolle zum Stützen und Führen von gegossenen Metallsträngen in einer Stranggießanlage, mit einer zentralen drehbaren Welle (1) und mit mindestens einem auf dieser Welle verdrehgesichert abgestützten Rollenmantel (3), **dadurch gekennzeichnet, dass** der Rollenmantel (3) über Stützringe (4) auf der Welle (1) abgestützt ist, dass zwischen der Welle (1) und dem Rollenmantel (3) ein von den Stützringen (4) in axialer Richtung begrenzter Ringraum (6) gebildet und der Ringraum (6) als Kühlmittelkanal ausgebildet ist.

2. Strangführungsrolle nach Anspruch 1, **dadurch gekennzeichnet, dass** zwischen den Stützringen (4) und dem Rollenmantel (3) und zwischen den Stützringen (4) und der zentralen Welle (1) Dichtelemente (20, 21), vorzugsweise in Ringnuten eingesetzte Dichtringe, angeordnet sind.

3. Strangführungsrolle nach Anspruch 1 oder 2, **dadurch gekennzeichnet, dass** der als Kühlmittelkanal ausgebildete Ringraum (6) mit einer in der zentralen Welle (1) angeordneten Kühlmittelleitung (12, 18) über radiale Stichleitungen (13, 17) für die Zu- und Ableitung eines Kühlmittels verbunden ist.

4. Strangführungsrolle nach einem der vorhergehenden Ansprüche, **dadurch gekennzeichnet, dass** die radialen Stichleitungen (13, 17) innerhalb der Längserstreckung der Stützringe (4) in eine Ringnut (14, 16) des Stützringes (4) münden, der über eine Vielzahl von Austrittsöffnungen (19) zum Ringraum (6) offen ist.

5. Strangführungsrolle nach einem der vorhergehenden Ansprüche, **dadurch gekennzeichnet, dass** der Rollenmantel (3) zur Welle (1) durch eine Verdrehsicherung (5), vorzugsweise eine Passfeder, drehgesichert ist und die Verdrehsicherung (5) den Ringraum (6) durchsetzt.

6. Strangführungsrolle nach Anspruch 1, **dadurch gekennzeichnet, dass** zwei einen Rollenmantel (3) auf der Welle (1) abstützende Stützringe (4) zu einer Stützringhülse (26) verbunden sind und zwischen dem Rollenmantel (3) und der Stützringhülse ein Ringraum (6) ausgebildet, der in seiner axialen Erstreckung von den Stützringen (4) begrenzt ist.

7. Strangführungsrolle nach Anspruch 6, **dadurch gekennzeichnet, dass** zwischen den Stützringen (4) der Stützringhülse (26) und dem Rollenmantel (3) und zwischen den Stützringen (4) und der zentralen Welle (1) Dichtelemente (20, 21), vorzugsweise in Ringnuten eingesetzte Dichtringe, angeordnet sind.

8. Strangführungsrolle nach Anspruch 6 oder 7, **dadurch gekennzeichnet, dass** der Ringraum (6) als Kühlmittelkanal ausgebildet ist, der mit einer in der zentralen Welle (1) angeordneten Kühlmittelleitung (12, 18) über radiale Stichleitungen (13, 17, 29, 30) für die Zu- und Ableitung eines Kühlmittels verbunden ist.

9. Strangführungsrolle nach einem der Ansprüche 6 bis 8, **dadurch gekennzeichnet, dass** der Rollenmantel (3) zur Welle (1) durch eine Verdrehsicherung (5), vorzugsweise eine Passfeder, drehgesichert ist und die Verdrehsicherung (5) den Ringraum (6) und die Stützringhülse (26) durchsetzt.

10. Strangführungsrolle nach einem der vorhergehenden Ansprüche, **dadurch gekennzeichnet, dass** die in der zentralen Welle (1) geführte Kühlmittelleitung (12) für die Kühlmittelzuführung von einer Stirnseite der zentralen Welle ausgeht und die in der zentralen Welle angeordnete Kühlmittelleitung (18) für die Kühlmittelabführung an der gegenüberliegenden Stirnseite der zentralen Welle mündet und jeder Kühlmittelleitung (12, 18) eine Dreheinführung (10, 11) zugeordnet ist.

11. Strangführungsrolle nach einem der vorhergehenden Ansprüche, **dadurch gekennzeichnet, dass** die in der zentralen Welle (1) geführten Kühlmittelleitungen (12, 18) in einer Stirnseite der zentralen Welle münden und diesen Kühlmittelleitungen eine mehrgängige Dreheinführung zugeordnet ist.

## Claims

1. Strand-guiding roll for supporting and guiding cast metal strands in a continuous casting installation, having a central rotatable shaft (1) and having at least one roll shell (3) supported fixed against rotation on this shaft, **characterized in that** the roll shell (3) is supported via support rings (4) on the shaft (1), **in that** an annular space (6) which is axially delimited by the support rings (4) is formed between the shaft (1) and the roll shell (3), and the annular space (6) is designed as a coolant conduit.

2. Strand-guiding roll according to Claim 1, **characterized in that** sealing elements (20, 21), preferably sealing rings inserted in annular grooves, are arranged between the support rings (4) and the roll shell (3) and between the support rings (4) and the central shaft (1).

3. Strand-guiding roll according to Claim 1 or 2, **characterized in that** the annular space (6), which is designed as a coolant conduit, is connected to a coolant line (12, 18) arranged in the central shaft (1) via radial branch lines (13, 17) for supplying and discharging a coolant.

4. Strand-guiding roll according to one of the preceding claims, **characterized in that** the radial branch lines (13, 17) open out within the longitudinal extent of the support rings (4) into an annular groove (14, 16) in the support ring (4) which is open toward the annular space (6) via a multiplicity of outlet openings (19).

5. Strand-guiding roll according to one of the preceding claims, **characterized in that** the roll shell (3) is secured against rotation with respect to the shaft (1) by a rotation-preventing means (5), preferably a feather key, and the rotation-preventing means (5) passes through the annular space (6).

6. Strand-guiding roll according to Claim 1, **characterized in that** two support rings (4), which support a roll shell (3) on the shaft (1), are connected to form a support-ring sleeve (26), and an annular space (6), the axial extent of which is delimited by the support rings (4), is formed between the roll shell (3) and the support-ring sleeve.

7. Strand-guiding roll according to Claim 6, **characterized in that** sealing elements (20, 21), preferably sealing rings inserted in annular grooves, are arranged between the support rings (4) of the support-ring sleeve (26) and the roll shell (3) and between the support rings (4) and the central shaft (1).

8. Strand-guiding roll according to Claim 6 or 7, **characterized in that** the annular space (6) is designed as a coolant conduit, which is connected to a coolant line (12, 18) arranged in the central shaft (1) via radial branch lines (13, 17, 29, 30) for supplying and discharging a coolant.

9. Strand-guiding roll according to one of Claims 6 to 8, **characterized in that** the roll shell (3) is secured against rotation with respect to the shaft (1) by a rotation-preventing means (5), preferably a feather key, and the rotation-preventing means (5) passes through the annular space (6) and the support-ring sleeve (26).

10. Strand-guiding roll according to one of the preceding claims, **characterized in that** the coolant line (12) for supplying coolant which runs within the central shaft (1) starts from one end side of the central shaft, and the coolant line (18) for discharging coolant arranged in the central shaft opens out at the opposite end side of the central shaft, and each coolant line (12, 18) is assigned a rotary connection piece (10, 11).

11. Strand-guiding roll according to one of the preceding claims, **characterized in that** the coolant lines (12, 18) which run within the central shaft (1) open out in one end side of the central shaft, and these coolant lines are assigned a multiple rotary connection piece.

## Revendications

1. Galet de guidage de barre pour soutenir et guider des barres métalliques coulées dans une installation de coulée continue, avec un arbre rotatif central (1) et avec au moins une enveloppe de galet (3) calée en rotation sur cet arbre, **caractérisé en ce que** l'enveloppe de galet (3) est supportée sur l'arbre (1) au moyen de bagues d'appui (4), **en ce qu'**une chambre annulaire (6) limitée en direction axiale par les bagues d'appui (4) est formée entre l'arbre (1) et l'enveloppe de galet (3), et **en ce que** la chambre annulaire (6) forme un canal d'agent de refroidissement.

2. Galet de guidage de barre selon la revendication 1, **caractérisé en ce que** des éléments d'étanchéité (20, 21), de préférence des joints d'étanchéité insérés dans des rainures annulaires, sont disposés entre les bagues d'appui (4) et l'enveloppe de galet (3) et entre les bagues d'appui (4) et l'arbre central (1).

3. Galet de guidage de barre selon la revendication 1 ou 2, **caractérisé en ce que** la chambre annulaire (6) formant un canal d'agent de refroidissement est raccordée à une conduite d'agent de refroidissement (12, 18) disposée dans l'arbre central (1) par des conduites de branchement radiales (13, 17) pour l'arrivée et le retour d'un agent de refroidissement.

4. Galet de guidage de barre selon l'une quelconque des revendications précédentes, **caractérisé en ce que** les conduites de branchement radiales (13, 17) débouchent, à l'intérieur de l'extension longitudinale des bagues d'appui (4), dans une rainure annulaire (14, 16) de la bague d'appui (4) qui est ouverte vers la chambre annulaire (6) par une multiplicité d'orifices de sortie (19).

5. Galet de guidage de barre selon l'une quelconque des revendications précédentes, **caractérisé en ce que** l'enveloppe de galet (3) est calée en rotation par rapport à l'arbre (1) par une fixation contre la rotation (5), de préférence une clavette parallèle, et la fixation contre la rotation (5) traverse la chambre annulaire (6).

6. Galet de guidage de barre selon la revendication 1, **caractérisé en ce que** deux bagues d'appui (4) supportant une enveloppe de galet (3) sur l'arbre (1) sont réunies en une douille annulaire d'appui (26) et une chambre annulaire (6), qui est limitée dans son extension axiale par les bagues d'appui (4), est formée entre l'enveloppe de galet (3) et la douille annulaire d'appui.

7. Galet de guidage de barre selon la revendication 6, **caractérisé en ce que** des éléments d'étanchéité (20, 21), de préférence des joints d'étanchéité insérés dans des rainures annulaires, sont disposés entre les bagues d'appui (4) de la douille annulaire d'appui (26) et l'enveloppe de galet (3) et entre les bagues d'appui (4) et l'arbre central (1).

8. Galet de guidage de barre selon la revendication 6 ou 7, **caractérisé en ce que**, la chambre annulaire (6) forme un canal d'agent de refroidissement, qui est raccordé à une conduite d'agent de refroidissement (12, 18) disposée dans l'arbre central (1) par des conduites de branchement radiales (13, 17, 29, 30) pour l'arrivée et le retour d'un agent de refroidissement.

9. Galet de guidage de barre selon l'une quelconque des revendications 6 à 8, **caractérisé en ce que** l'enveloppe de galet (3) est calée en rotation par rapport à l'arbre (1) par une fixation contre la rotation (5), de préférence une clavette parallèle, et la fixation contre la rotation (5) traverse la chambre annulaire (6) et la douille annulaire d'appui (26).

10. Galet de guidage de barre selon l'une quelconque des revendications précédentes, **caractérisé en ce que** la conduite d'agent de refroidissement (12) menée dans l'arbre central (1) pour l'arrivée de l'agent de refroidissement part d'une face frontale de l'arbre central et la conduite d'agent de refroidissement (18) disposée dans l'arbre central (1) pour l'évacuation de l'agent de refroidissement débouche dans la face frontale opposée de l'arbre central, et une entrée rotative (10, 11) est associée à chaque conduite d'agent de refroidissement (12, 18).

11. Galet de guidage de barre selon l'une quelconque des revendications précédentes, **caractérisé en ce que** les conduites d'agent de refroidissement (12, 18) menées dans l'arbre central (1) débouchent dans une face frontale de l'arbre central et une entrée rotative multiple est associée à ces conduites d'agent de refroidissement.
